# EUROPEAN PATENT APPLICATION

(11) **EP 2 952 765 A1**
(43) Date of publication of application: **09.12.2015**
(21) Application number: 14746145.3
(22) Date of filing: 24.01.2014
(51) Int. Cl.: F16C 33/78, F16C 19/04, F16J 15/32

(54) **ROLLER BEARING**

(30) Priority: 31.01.2013 JP 2013016339
(71) Applicant: NTN Corporation, Osaka-shi, Osaka 550-0003 (JP)
(72) Inventor: ISODA, Koji, Iwata-shi Shizuoka 438-0037 (JP)
(74) Representative: Maikowski & Ninnemann
(86) International application number: PCT/JP2014/051582
(87) International publication number: WO 2014/119491

(57) **Abstract**

A rolling bearing includes, at an end of a sealing member body (8), a sealing lip portion (9) having a radial edge (9a) that is brought into radial contact with an inner ring (1). The sealing lip portion (9) has a fishhook-shaped cross-section in which the sealing lip portion (9) is bent at a waist portion (11) that is an intermediate portion thereof in a radial direction, so as to form a relief recess (13) in a surface on an outer side relative to a bearing space and an extensive portion (9b) extends, in a turned back manner, from the radial edge (9a) so as to be inclined relative to an axial direction toward the outer side of the bearing. The sealing lip portion (9) includes a projection (12) that has a tapered shape in which a portion that is closer to a tip end side than the waist portion (11) has a dimension reduced toward a tip end side, and a thickness (t1) of the waist portion (11) is set so as to be not smaller than 25% of a thickness (t2) of the tip end of the sealing member body (8), and not greater than 75% thereof.

## Description

### CROSS REFERENCE TO THE RELATED APPLICATION

This application is based on and claims Convention priority to Japanese patent application No. 2013-016339, filed January 31, 2013, the entire disclosure of which is herein incorporated by reference as a part of this application.

### BACKGROUND OF THE INVENTION

### (Field of the Invention)

The present invention relates to rolling bearings for use in, for example, transmissions for automobiles.

### (Description of Related Art)

In transmissions for automobiles, foreign matters such as wear debris from gears may exist. Therefore, contact-type sealing plates (sealing members) are used for conventional bearings for transmissions. When a bearing space is hermetically sealed with such a contact-type sealing member, although ingress of foreign matters into the bearing can be avoided, how mechanical loss is to be reduced in order to pursue fuel consumption saving for the automobiles needs to be considered. For example, a technique (Patent Document 1) has been suggested in which contact resistance is reduced at a lip portion in order to reduce the mechanical loss. Further, as shown in Fig. 9, a technique (Patent Document 2) in which the use of a material 50 susceptible to wear as a seal material allows a contact-type seal in an initial state to shift to a non-contact-type seal early after operation has been suggested.

### [Related Document]

### [Patent Document]

[Patent Document 1] JP Laid-open Patent Publication No. 2007-107588
[Patent Document 2] JP Laid-open Patent Publication No. 2010-019296

### SUMMARY OF THE INVENTION

In the technique described in Patent Document 1, a torque reducing effect is limited, and a satisfactory torque reducing effect cannot be obtained. In the technique described in Patent Document 2, the seal needs to contact with an inner ring of a bearing with a constant pressure to some degree in order to early wear the seal. However, when an interference between the inner ring and a sealing lip varies in consideration of an allowance, a sealing lip position to be required cannot be obtained, and variation of contact stress becomes great, so that wearing of the sealing lip may be difficult.

An object of the present invention is to provide a rolling bearing that allows a contact surface pressure of a sealing lip portion against a bearing ring to be constant to form an optimum labyrinth gap between the sealing lip portion and the bearing ring even in a case where an interference between the sealing lip portion and the bearing ring varies.

A rolling bearing of the present invention includes: inner and outer rings; a plurality of rolling elements interposed between raceway surfaces of the inner and outer rings; and a sealing member that hermetically seals a bearing space formed between the inner and outer rings. The sealing member includes: a sealing member body having a base end fixed to a bearing ring that is one of the inner and outer rings; and a sealing lip portion disposed at a tip end of the sealing member body, the sealing lip portion having a radial edge brought into radial contact with the other bearing ring. The sealing lip portion has a fishhook-shaped or J-shaped cross-section in which the sealing lip portion is bent at a waist portion that is an intermediate portion thereof in a radial direction, so as to form a relief recess in a surface on an outer side relative to the bearing space and an extensive portion extends, in a turned back manner, from the radial edge so as to be inclined relative to an axial direction toward the outer side of the bearing. The sealing lip portion includes a projection that has a tapered shape in which a portion that is closer to a tip end side than the waist portion has a dimension reduced toward a tip end side. A thickness of the waist portion is set so as to be not smaller than 25% of a thickness of the tip end of the sealing member body, and not greater than 75% thereof.

In this configuration, the sealing lip portion has a fishhook-shaped cross-section in which the sealing lip portion is bent at the waist portion that is an intermediate portion thereof in a radial direction, so as to form the relief recess in a surface on the outer side relative to the bearing space, and the extensive portion extends, in a turned back manner, from the radial edge that is brought into the radial contact, so as to be inclined relative to the axial direction toward the outer side of the bearing. Further, the thickness of the waist portion is set so as to be not smaller than 25% of the thickness of the end of the sealing member body, and not greater than 75% thereof. Therefore, in a case where the projection that is closer to the end side than the waist portion is formed of, for example, a material that is susceptible to wear, a contact surface pressure necessary for wearing the projection of the sealing member which has been brought into radial contact with the other bearing ring before the bearing is operated, is allowed to act on the projection, and the sealing lip portion is flexibly deformed, so as to avoid excessive increase of the contact surface pressure. Accordingly, the projection can be worn by the bearing being operated, whereby an optimum small gap, that is, a labyrinth gap, can be formed between the sealing lip portion and the other bearing ring. Therefore, sealing torque can be reduced early after operation.
(1) In a case where the thickness of the waist portion is less than 25% of the thickness of the end of the sealing member body, contact stress for wearing the sealing lip portion relative to the other bearing ring becomes insufficient due to insufficient rigidity of the sealing lip portion.
(2) In a case where the thickness of the waist portion is greater than 75% of the thickness of the end of the sealing member body, the sealing lip portion may not sufficiently ride on the other bearing ring when the seal is assembled, due to excessive rigidity of the sealing lip portion.
(3) In a case where the thickness of the waist portion is greater than 75% of the thickness of the end of the sealing member body, when the radial edge of the sealing lip portion rides on a corner portion or an R portion of the other bearing ring after the radial edge is caught by the R portion when the seal is inserted in the bearing, the sealing lip portion is elastically deformed so as to expand the relief recess due to the elastic restoring force of the sealing lip portion. Thus, the extensive portion, of the sealing lip portion, which extends from the radial edge so as to be inclined toward the axial outer side of the bearing may approach the other bearing ring in some cases.

In any of the cases (1) to (3), a problem may arise that the contact surface pressure of the sealing lip portion is less than the contact surface pressure necessary for wear.

By the labyrinth gap being formed, the following effects can be obtained when the rolling bearing is used for, for example, a transmission for an automobile.

As compared to conventional products, self-increase of temperature of the bearing is early reduced.

An oil having a viscosity lower than a conventionally used oil can be selected since the self-increase of temperature of the bearing is reduced.

Early reduction of mechanical loss in the entirety of the transmission can be expected.

The labyrinth gap can prevent ingress of foreign matters having large particle diameters, which may adversely affect the bearing life, into the bearing.

Therefore, even when the interference between the bearing ring and the sealing lip portion varies, a contact surface pressure of the sealing lip portion relative to the bearing ring can be made constant, so as to form an optimum labyrinth gap between the sealing lip portion and the bearing ring. Accordingly, ingress of foreign matters into the bearing can be avoided, and also, fuel consumption of automobiles can be saved.

In the rolling bearing a first radial dimension from the end of the sealing member body to a base end of the projection may be set so as to be greater than or equal to 50% of the thickness of the end of the sealing member body, and not greater than 100% thereof, and a second radial dimension from the end of the sealing member body to an end of the projection may be set so as to be greater than or equal to 100% of the thickness of the end of the sealing member body, and not greater than 150% thereof. In the rolling bearing an interference of the sealing lip portion may be set so as to be greater than or equal to 20% of the thickness of the waist portion, and not greater than 70% thereof.

In the rolling bearing the projection of the sealing lip portion may be formed of such a material highly susceptible to wear as to allow the projection to be worn and enter a non-contact state, or enter a lightly contacting state in which a contact pressure is regarded as zero, when the bearing is used in its rotating state. In this case, the sealing member, which is of a contact-type in the initial stage, shifts to a non-contact-type or light contact-type sealing member due to wear after operation. At this time, even when the interference between the bearing ring and the sealing lip portion varies, a contact surface pressure of the sealing lip portion relative to the bearing ring can be made constant, as described above. Therefore, the projection of the sealing lit portion can be early worn, so as to form an optimum labyrinth gap between the sealing lip portion and the bearing ring.

The material highly susceptible to wear may be a rubber material or a resinous material. The material highly susceptible to wear may be a rubber material, and the sealing member may be formed by the rubber material being vulcanized and molded. The material highly susceptible to wear may be a resinous material, and the sealing member may be formed by the resinous material being injection-molded.

The rolling bearing may include suction adhesion preventer configured to prevent the sealing member from adhering, by suction, to the other bearing ring. When the bearing has a contact-type sealing member, the sealing member may be adhered, by suction, to the rotating bearing ring due to reduction of internal pressure within the bearing space, so as to increase torque of the rotating bearing ring. For example, when the projection is formed of the material highly susceptible to wear, adhesion by suction may occur similarly to a standard contact seal before the projection is worn. In the configuration mentioned above, since the sealing member has the suction adhesion preventer, adhesion by suction before the projection is worn is prevented, thereby avoiding increase of torque.

The rolling bearing may be used for a transmission for an automobile. In this case, an optimum labyrinth gap is formed by the bearing being operated, whereby ingress, of foreign matters such as wear debris from the gear in the transmission, into the bearing can be avoided. Further, sealing torque can be reduced, whereby fuel consumption of the automobile can be saved.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a longitudinal cross-sectional view of a rolling bearing according to a first embodiment of the present invention;
Fig. 2A is an enlarged cross-sectional view of a region near a sealing member of the rolling bearing;
Fig. 2B is an enlarged cross-sectional view of a region near a sealing lip portion of the sealing member;
Fig. 3A is an enlarged cross-sectional view of a main portion in a state where the sealing lip portion contacts with an inner ring;
Fig. 3B is an enlarged cross-sectional view of a main portion in a state where a projection of the sealing lip portion is being worn during the bearing rotating;
Fig. 3C is an enlarged cross-sectional view of a main portion in a state where the sealing lip portion has been worn and a labyrinth gap has been formed;
Fig. 4A is a longitudinal cross-sectional view of a conventional sealing member;
Fig. 4B is a longitudinal cross-sectional view of the sealing member of the first embodiment;
Fig. 4C illustrates a relationship between an interference and a torque for the sealing member of the first embodiment and the conventional sealing member;
Fig. 5 illustrates a relationship between an interference and a lip contact surface pressure for the sealing member of the first embodiment and the conventional sealing member;
Fig. 6 is a longitudinal cross-sectional view of a seal mold for the sealing member of the first embodiment;
Fig. 7 is a plan view of a sealing member of a rolling bearing according to a second embodiment of the present invention;
Fig. 8 schematically illustrates an exemplary case where the rolling bearing according to any one of the first and second embodiments of the present invention is used for a transmission;
Fig. 9 is an enlarged cross-sectional view of a main portion of the conventional sealing member;
Fig. 10 is a cross-sectional view of a main portion of the conventional sealing member in an undesirable sealing lip position;
Fig. 11 is a longitudinal cross-sectional view illustrating a position history of the conventional sealing member in the case of a lip being press-fitted;
Fig. 12 is a longitudinal cross-sectional view illustrating a state where a sealing lip of the conventional sealing member insufficiently rides on an inner ring shoulder; and
Fig. 13 is a longitudinal cross-sectional view illustrating a state where contact stress of a sealing lip portion of the conventional sealing member is insufficient.

### DESCRIPTION OF PREFERRED EMBODIMENTS

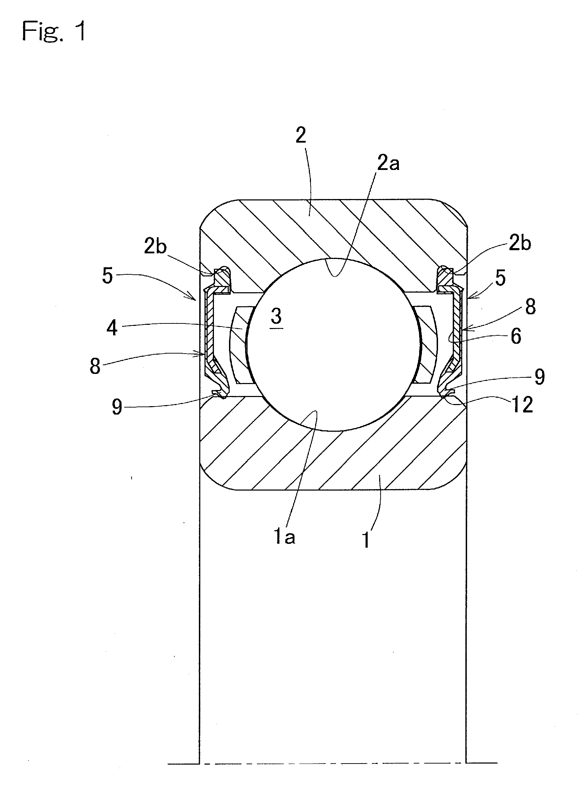

A rolling bearing according to a first preferred embodiment of the present invention will be described with reference to Fig. 1 to Fig. 6. The rolling bearing according to the present preferred embodiment is used for, for example, transmissions for automobiles. As shown in Fig. 1, the rolling bearing includes: inner and outer rings 1 and 2 that serve as bearing rings; a plurality of rolling elements 3 interposed between raceway surfaces 1a and 2a of the inner and outer rings 1 and 2; and a retainer 4 that retains the rolling elements 3. Further, an annular bearing space is formed between the inner and outer rings 1 and 2, and both ends of the annular bearing space are each hermetically sealed with a sealing member 5. Grease is initially sealed in the bearing space. The rolling bearing is a deep groove ball bearing in which the rolling elements 3 are in the form of balls. In this preferred embodiment, the rolling bearing is of an inner ring rotating type in which the inner ring 1 is a rotating ring, and the outer ring 2 is a stationary ring. However, the rolling bearing may be implemented as, for example, an angular contact ball bearing. Further, the rolling bearing may be of an outer ring rotating type in which the inner ring 1 is a stationary ring, and the outer ring 2 is a rotating ring.

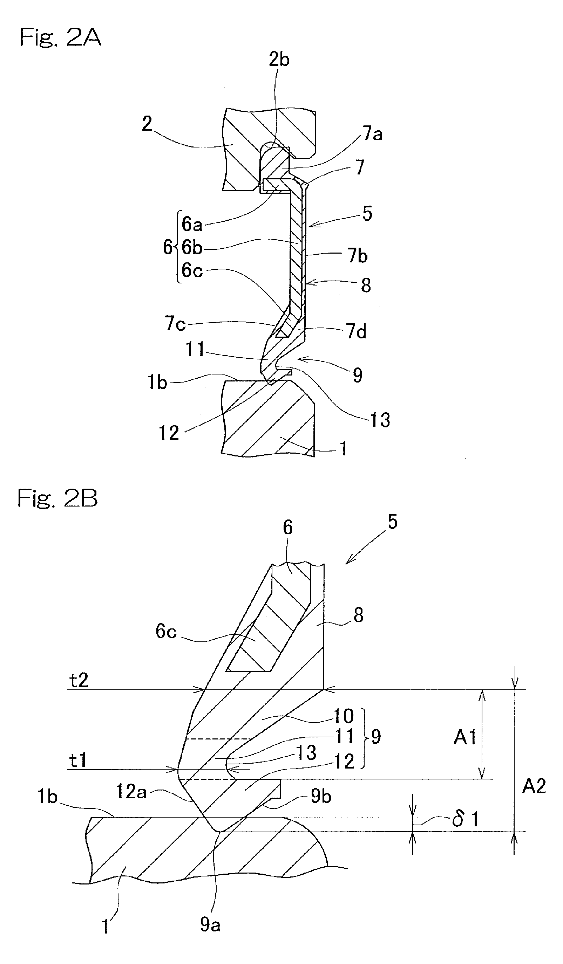

As shown in Fig. 2A, a seal mounting groove 2b into which the annular sealing member 5 is press-fitted is formed on an inner peripheral surface of the outer ring 2. The sealing member 5 includes an annular metal core 6, and an elastic member 7 that is integrally fixed to the metal core 6. A sealing member body 8 is formed by the metal core 6 and a majority of the elastic member 7. A sealing lip portion 9 is formed by the remaining portion of the elastic member 7, that is, by the inner peripheral side portion of the elastic member 7 in this preferred embodiment. The sealing lip portion 9 is shaped such that an edge, of the sealing lip portion 9, in the radial direction is brought into radial contact with the inner ring 1. Further, in this preferred embodiment, the elastic member 7 is provided so as to cover the entirety of the metal core 6 except for an inner side surface of an upright portion 6b of the metal core 6. The sealing member 5 is formed by, for example, a rubber material being vulcanized and molded, and the metal core 6 made of a metal is adhered to the elastic member 7 during the vulcanizing and molding. The rubber material having a physical property or Young's modulus of, for example, 0.082 kgf/mm² is used. However, the physical property is not limited to this value.

The metal core 6 includes a cylindrical portion 6a, the upright portion 6b, and an inclined portion 6c in order, respectively, from the outer diameter side. The upright portion 6b is disposed inward of end surfaces of the inner and outer rings 1, 2 in the axial direction so as to be substantially parallel to the end surfaces. The cylindrical portion 6a is joined to a base end (radially outer end) of the upright portion 6b, and the upright portion 6b and the cylindrical portion 6a form an L-shaped cross-section. A base end of the sealing member 5, which is formed by the cylindrical portion 6a and an outer peripheral portion 7a (a portion of the elastic member 7) disposed on the outer peripheral surface of the cylindrical portion 6a, cooperate together to form a base end of the sealing member body 8. The base end of the sealing member body 8 is press-fitted into the seal mounting groove 2b of the outer ring 2. At this time, the outer peripheral portion 7a is fixed in the seal mounting groove 2b so as to be elastically deformed, whereby to enhance sealing between the outer ring 2 and the base end of the sealing member body 8. The inclined portion 6c is inclined inward in the axial direction toward the inner diameter side, and is joined to the tip end (radially inner end) of the upright portion 6b. In a state where the seal is mounted, a distance between the tip end (radially inner end) of the inclined portion 6c and an outer peripheral surface 1b of the inner ring 1 is defined as being, for example, greater than or equal to 1.4 mm, and not greater than1.5 mm.

In the metal core 6, the upright portion 6b has an outer surface covered with a uniformly thin covering 7b, and the inclined portion 6c has inner and outer surfaces covered with coverings 7c and 7d, respectively. The tip ends, of the coverings 7c and 7d, on the inner diameter side form the end of the sealing member body 8. At the tip end of the sealing member body 8, the sealing lip portion 9 is provided so as to contact with the outer peripheral surface 1b (which may be referred to as an "inner ring shoulder portion 1b") of the inner ring 1. The inner ring shoulder portion 1b, with which the sealing lip portion 9 contacts, is provided so as to be parallel to the inner ring axial direction. Although, in Fig. 2A and Fig. 2B, the tip end of the sealing lip portion 9 appears to be fitted into the inner ring 1, the tip end of the sealing lip portion 9 actually contacts with the inner ring 1 with an interference that is, for example, greater than or equal to 0.13 mm, and not greater than 0.27 mm, in a state where the seal is mounted.

As shown in Fig. 2B, the sealing lip portion 9 has a lip base end portion 10, a waist portion 11, and a projection 12 in order, respectively, from the outer diameter side. The lip base end portion 10, the waist portion 11, and the projection 12 are integrated with each other. The lip base end portion 10 extends toward the inner diameter side inward of the inner peripheral edge of the inclined portion 6c of the metal core 6 over a predetermined distance, and forms a base end portion, of the sealing lip portion 9, in the radial direction. The lip base end portion 10 has a cross-sectional shape having a thickness reduced toward the tip end on the inner diameter side, that is, toward the waist portion 11. Further, the lip base end portion 10 is formed so as to have a cross-sectional shape in which an inner side surface on the bearing space side, and an outer side surface opposite to the inner side surface are inclined so as to extend to the inner side in the axial direction while approaching the tip end on the inner diameter side.

The waist portion 11 forms an intermediate portion, of the sealing lip portion 9, in the radial direction, and is disposed between the lip base end portion 10 and the projection 12. In a state where the sealing member 5 is incorporated in the bearing, the sealing lip portion 9 has a fishhook-shaped or J-shaped cross-section (see the sealing member 5 at the left in Fig. 1), in which the sealing lip portion 9 is bent at the waist portion 11 so as to form a relief recess 13, for releasing contact pressure from the inner ring 1 in a surface on the outer side relative to the bearing space and an extensive portion 9b extends, in a turned back manner, from a radial edge 9a that is brought into the radial contact, so as to be inclined relative to the axial direction toward the outer side of the bearing. In this case, the relief recess 13 is in the form of a recess that is comprised of a surface formed by an outer side surface of the waist portion 11 and an outer side surface of the lip base end portion 10. The above cross-section means a cross-section as viewed when the sealing member 5 is cut along a plane including the axis of the bearing.

The waist portion 11 has a cross-sectional shape in which an intermediate portion of the waist portion 11 in the radial direction is thinnest and the thickness is increased toward both ends thereof in the radial direction. An inner side surface of the waist portion 11 on the bearing space side is jointed to an inner side surface of the lip base end portion 10, and the outer side surface of the waist portion 11 is joined to the outer side surface of the lip base end portion 10. A thickness t1 of the intermediate portion of the waist portion 11 in the radial direction is set so as to be greater than or equal to 25% of a thickness t2 of the tip end of the sealing member body 8, and not greater than 75% thereof. Further, a radial dimension A1 from the tip end of the sealing member body 8 to the base end of the projection 12 is set so as to be greater than or equal to 50% of the thickness t2 of the tip end of the sealing member body 8, and not greater than 100% thereof. Furthermore, a radial dimension A2 from the tip end of the sealing member body 8 to the tip end of the projection 12 is set so as to be greater than or equal to 100% of the thickness t2 of the tip end of the sealing member body 8, and not greater than 150% thereof.

That is, the dimensions t1, A1, A2 of the sealing lip portion 9 are in the ranges indicated in Table 1 in which the dimension t2 is used as a reference.

**[Table 1]**

| t2 (reference) | A1 | A2 | t1 |
|---|---|---|---|
| 100 | 50% to 100% | 100% to 150% | 25% to 75% |

The projection 12 is closer to the tip end side than the waist portion 11 and has a tapered shape in which the thickness is reduced toward the tip end. An inner side surface 12a of the projection 12 on the bearing space side, is formed so as to have a cross-sectional shape in which the inner side surface 12a is inclined so as to extend to the outer side in the axial direction towards the tip end on the inner diameter side. The extensive portion 9b, of the projection 12, which extends, in a turned back manner, from the radial edge 9a that is brought into the radial contact, so as to be inclined toward the outer side of the bearing, has a cross-sectional shape that is inclined so as to extend to the inner side in the axial direction towards the radial edge 9a. Thus, the projection 12 has a tapered shape having a triangular cross-section in which the thickness of the projection 12 in the axial direction is reduced toward its tip end. Thus, contact pressure with which the projection 12 may be worn is likely to act on the sealing lip portion 9.

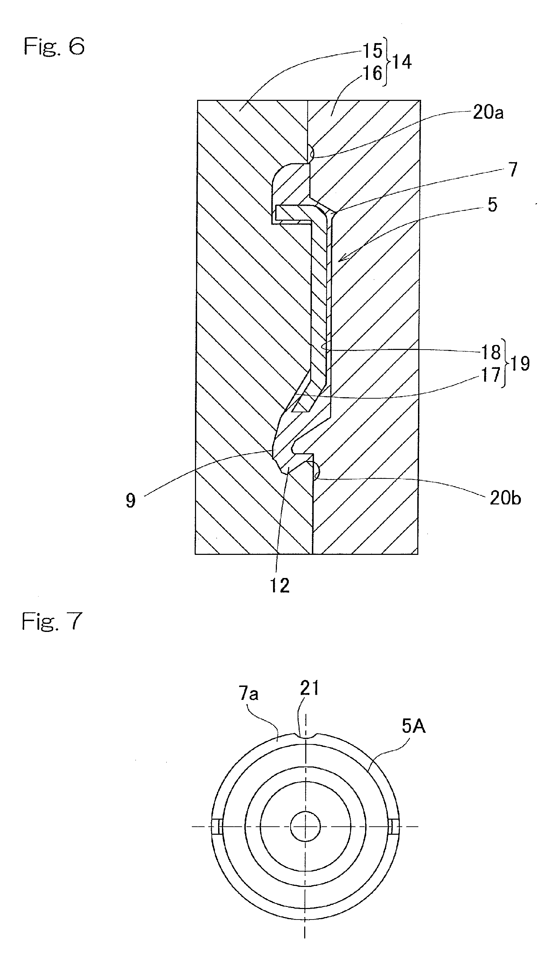

The projection 12 is formed of such a material highly susceptible to wear as to allow the projection 12 to be worn and enter a non-contact state, or enter a lightly contacting state in which the contact pressure may be regarded as zero, when the bearing is used in its rotating state. The material highly susceptible to wear is provided only in the projection 12 on the tip end side in this embodiment. However, the present invention is not limited to this embodiment. For example, the projection 12 and the waist portion 11 may be formed of the material highly susceptible to wear, or the entirety of the sealing lip portion 9 including the projection 12, the waist portion 11, and the lip base end portion 10 may be formed of the material highly susceptible to wear. The material highly susceptible to wear is, for example, a rubber material highly susceptible to wear. As another material for the material highly susceptible to wear, a resinous material may be used. For example, as shown in Fig. 6, the resinous material can be injection-molded by using a seal mold 14 to form the sealing member 5.

In a state where the sealing member 5 is incorporated in the bearing, the tip end of the projection 12 of the sealing lip portion 9 is disposed inward of the inner ring shoulder portion 1b in the radial direction, that is, disposed with a so-called interference δ1. In this embodiment, the interference δ1 is defined as being greater than or equal to 0.13 mm, and not greater than 0.27 mm. Further, in a state where the sealing member 5 is incorporated in the bearing and the sealing lip portion 9 is in a desired position, a constant pressing force is applied from the sealing member 5 to the inner ring 1 according to variation of the interference δ1 of the projection 12 relative to the inner ring 1. That is, a constant lip contact surface pressure is applied to the projection 12 of the sealing lip portion 9. By the inner ring 1 being rotated in this state, the projection 12 is worn.

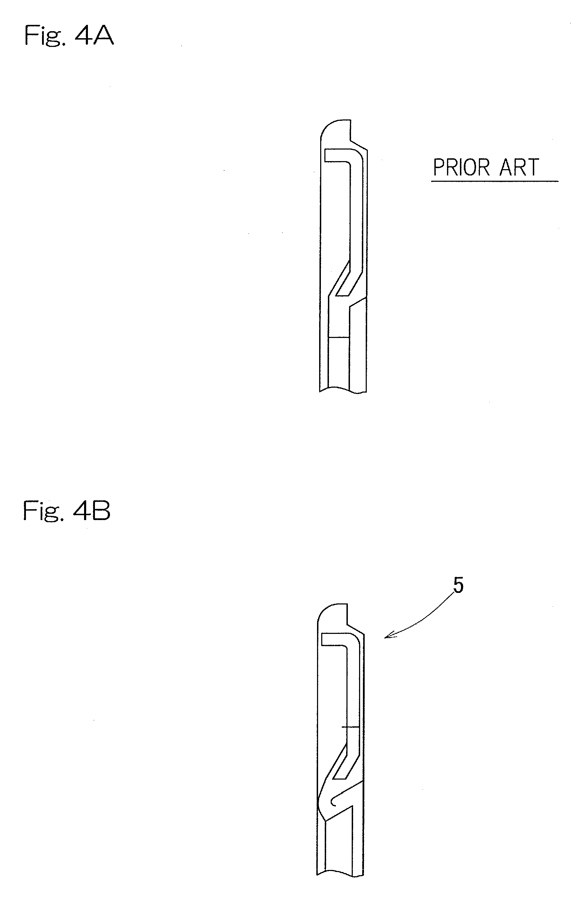

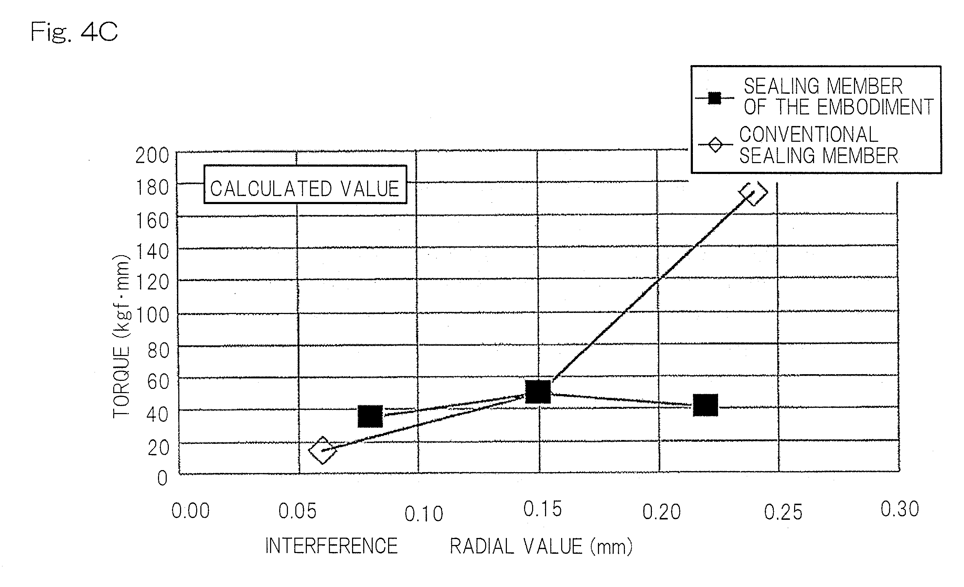

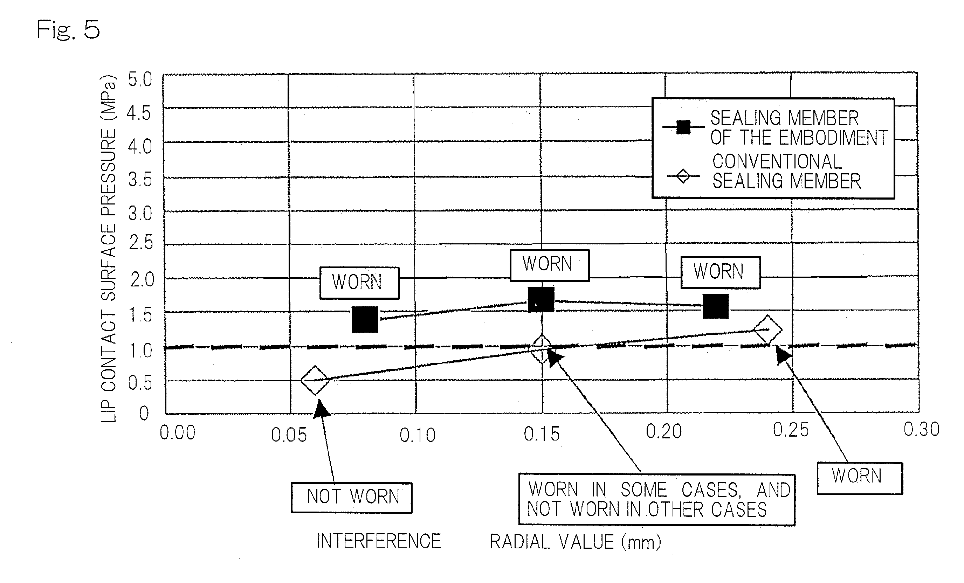

Fig. 4A is a cross-sectional view of a conventional sealing member, Fig. 4B is a cross-sectional view of the sealing member 5, and Fig. 4C illustrates a relationship between an interference and a torque for the sealing member of the preferred embodiment and the conventional sealing member. This relationship is based on calculated values. For a deep groove ball bearing having JIS bearing number 6207, a relationship between an interference and a torque in each of the cases of the conventional sealing member being incorporated and the sealing member 5 of the present embodiment being incorporated, was calculated. In Fig. 4C, a plot represented by outline rhombic marks indicates values for the conventional sealing member shown in Fig. 4A, and a plot represented by black quadrangular marks indicates values for the sealing member 5 of the present embodiment shown in Fig. 4B (the same applies to Fig. 5). As shown in Fig. 4C, as compared to the conventional sealing member, the sealing member 5 enables variation in torque to be reduced, and further enables the torque to be less than or equal to a certain torque, regardless of whether the interference is large or small.

Fig. 5 illustrates a relationship between the interference and a lip contact surface pressure for the sealing member 5 and the conventional sealing member. For a deep groove ball bearing having JIS bearing number 6207, a seal wear evaluation test was conducted in the cases where the conventional sealing member was incorporated and the sealing member 5 of the present embodiment was incorporated. The conditions for the test were, for example, a radial load of 500 N, a rotation speed of 4000 min⁻¹, and lubrication condition of axis oil bath with automatic transmission fluid.

### <Test results>

**[Table 2]**

| Worn state for each seal | | |
|---|---|---|
| | Conventional sealing member | Sealing member of the 1^{st} embodiment |
| Large interference | A | A |
| Intermediate interference | B | A |
| Small interference | C | A |

| | | |
|---|---|---|
| A: The seal is worn. B: The seal is worn in some cases, and the seal is not worn in other cases. C: The seal is not worn. | | |

In Table 2, the large interference represents an interference, relative to the inner ring shoulder portion, which is not smaller than 0.185 mm and not greater than 0.255 mm before the test, the intermediate interference represents an interference, relative to the inner ring shoulder portion, which is not smaller than 0.115 mm and not greater than 0.185 mm before the test, and the small interference represents an interference, relative to the inner ring shoulder portion, which is not smaller than 0.045 mm and not greater than 0.115 mm before the test.

According to the test results of Fig. 5, in the conventional sealing member, the seal was not worn in some cases. It was also confirmed in checking of the seal that the lip contact surface pressure was lower and, further, contact pressure varied according to the interference, as compared to the sealing member of the embodiment. Further, in the conventional sealing member, the lip position undesirably varied due to the interference, as described below, and thus the seal was not worn in some cases. On the other hand, the sealing member of the embodiment allows the sealing lip portion to be pressed constantly with a constant lip contact surface pressure to reduce variation in torque, by modifying the shape of the seal, regardless of whether the interference is large, intermediate, or small. Thus, lip contact surface pressure and torque can be assuredly made stable even if the interference varies, and the seal can be stably worn.

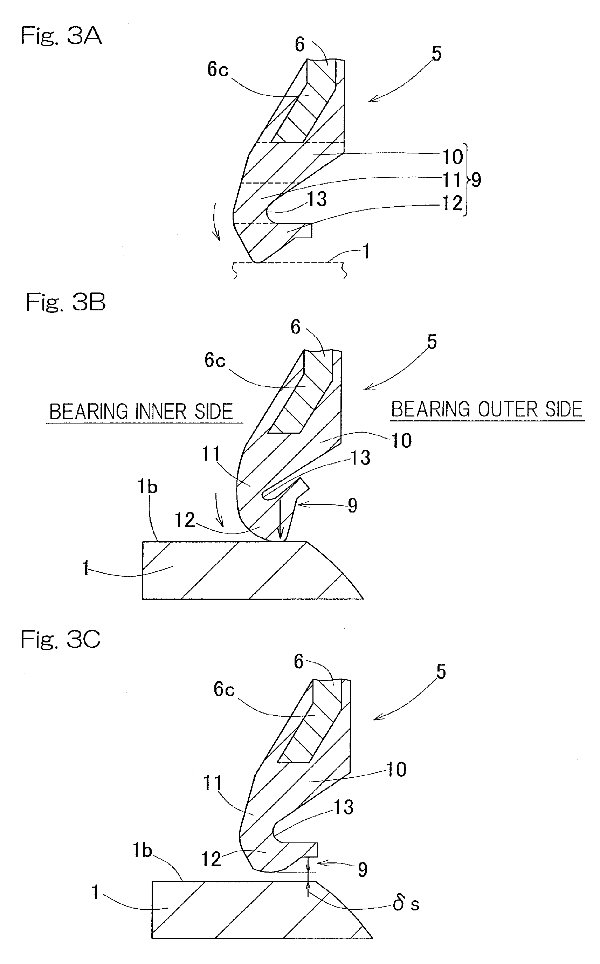

A mechanism of wearing the sealing lip portion 9 will be described. As shown in Fig. 3A, the sealing lip portion 9 has the fishhook-shaped cross-section, and is press-fitted into the inner ring shoulder portion 1b, whereby a reaction force against the inner ring 1, that is, a lip contact surface pressure acts in the projection 12. The sealing lip portion 9 is formed so as to have a fishhook-shaped cross-section, in which the sealing lip portion 9 is bent at the waist portion 11 so as to form the relief recess 13 in a surface on the outer side relative to the bearing space and the extensive portion 9b extends, in a turned back manner, from the radial edge 9a that is brought into the radial contact, so as to be inclined relative to the axial direction toward the outer side of the bearing. Therefore, the sealing lip portion 9 acts as a spring that is bent at the waist portion 11, and the projection 12 is pressed against the inner ring 1 with the lip contact surface pressure that is great enough to cause wear. As shown in Fig. 3B, when the inner ring 1 rotates to increase wear of the projection 12, the bending state of the waist portion 11 tends to be restored to the state where the sealing member has not been assembled yet, and therefore, wear of the projection 12 is continuously increased. As shown in Fig. 3C, the lip contact surface pressure approaches "0", and wearing of the sealing lip portion 9 is completed, to form an optimum labyrinth gap δs.

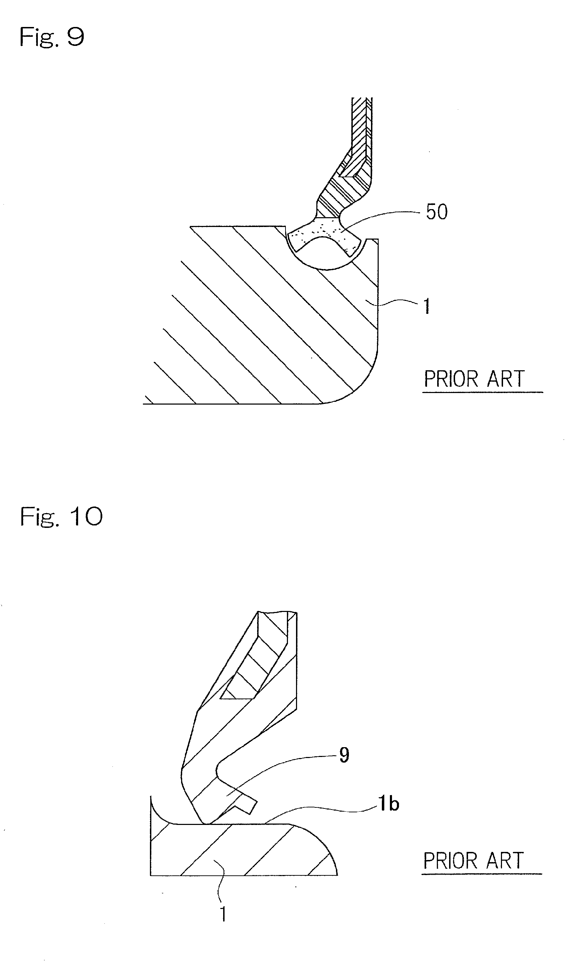

When the dimensions of the sealing lip portion 9 are outside the ranges indicated in Table 1, a problem with control of the sealing lip position may arise as described in (i) to (iii). Fig. 10 is a cross-sectional view of a main portion of the conventional sealing member in an undesirable sealing lip position.
(i) As shown in Fig. 10, in a case where the dimensions of the sealing lip portion are outside the ranges indicated in Table 1, for example, in a case where the interference is small, the sealing lip portion 9 may be pressed back by the inner ring shoulder portion 1b when the seal is inserted.

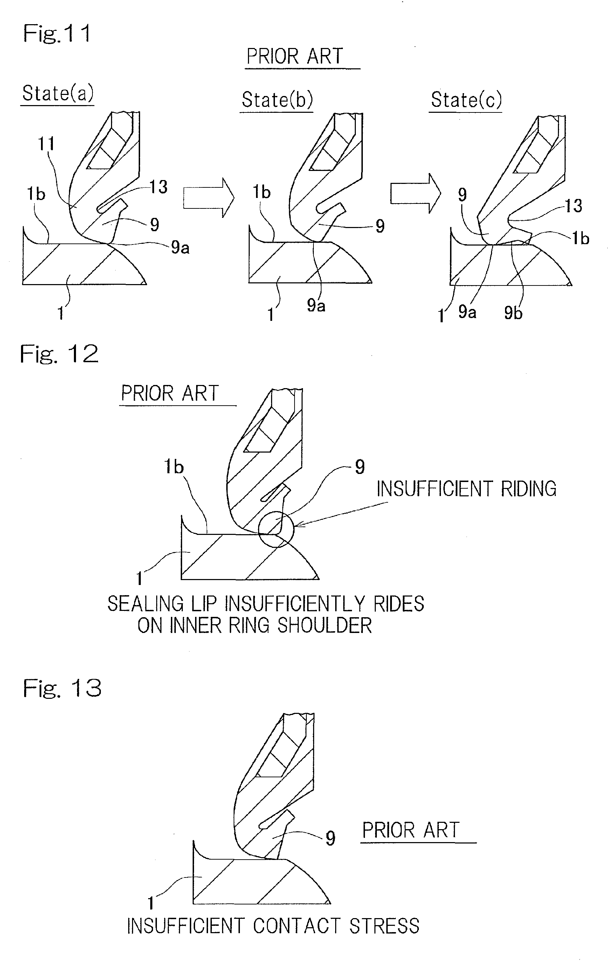

Fig. 11 illustrates a position history in the case of the lip being press-fitted. As shown in state (a) of Fig. 11, in a case where the sealing lip portion 9 is press-fitted, before the sealing lip portion 9 rides on the inner ring shoulder portion 1b, the relief recess 13 of the sealing lip portion 9 is elastically deformed in the narrowing direction. Then, the radial edge 9a of the sealing lip portion 9 is temporarily caught by a chamfered portion of the inner ring 1, and the sealing lip portion 9 acts as a spring that is bent at the waist portion 11.

As shown in state (b) of Fig. 11, when the radial edge 9a of the sealing lip portion 9 temporarily rides on the inner ring shoulder portion 1b, the relief recess 13 of the sealing lip portion 9 is elastically deformed in the expanding direction due to the elastic restoring force of the sealing lip portion 9 as shown in state (c) of Fig. 11. Thus, the extensive portion 9b, of the sealing lip portion 9, which extends so as to be inclined from the radial edge 9a toward the outer side of the bearing approaches the inner ring shoulder portion 1b. Thus, a problem may arise that contact surface pressure of the sealing lip portion 9 against the inner ring shoulder portion 1b may be reduced so as to be less than a minimum necessary contact pressure. The "minimum necessary contact pressure" means a lip contact surface pressure that is necessary for wearing the projection of the sealing lip portion 9, and is 1.1 MPa in this example.
(ii) In a case where the dimensions of the sealing lip portion 9 are outside the ranges indicated in Table 1, for example, in a case where the thickness of the waist portion is greater than 75% of the thickness of the tip end of the sealing member body and the interference is large, the sealing lip portion 9 may not sufficiently ride on the inner ring shoulder portion 1b when the seal is assembled, as shown in Fig. 12.
(iii) In a case where, for example, the thickness of the waist portion is less than 25% of the thickness of the tip end of the sealing member body, contact stress of the sealing lip portion 9 against the inner ring shoulder portion 1b may become insufficient (for example, less than 1.1 MPa) due to insufficient rigidity of the sealing lip portion 9, as shown in Fig. 13.

In any of the cases (i) to (iii), a problem may arise that the contact surface pressure of the sealing lip portion 9 is less than the minimum necessary contact pressure. In a case where the dimensions of the sealing lip portion 9 are outside the ranges indicated in Table 1, a problem with the sealing lip position may arise, or a problem may arise that the sufficient lip contact surface pressure may not be assured. Particularly when one or both of the dimension A1 and the dimension t1 rather than the dimension A2 is outside the ranges indicated in Table 1, a problem with the sealing lip position is more likely to arise.

Fig. 6 is a cross-sectional view of the seal mold 14 for the sealing member 5 of the rolling bearing according to the present embodiment. As shown in Fig. 6, the seal mold 14 includes, for example, two molds 15, 16 that are to be combined. The one mold 15, which is one of the molds 15, 16, has an annular cavity portion 17 for forming an inner side surface portion of the sealing member 5, and the other mold 16 has an annular cavity portion 18 for forming an outer side surface portion of the sealing member 5. In a state where these two molds 15, 16 are combined, a cavity 19 for forming the sealing member 5 is formed. The seal mold 14 is provided with gates 20a, 20b which are close to the outer peripheral side portion and the inner peripheral side portion, respectively, of the cavity 19, and through which a material of the elastic member 7 is injected into the cavity 19.

The projection 12 of the sealing lip portion 9 for which the rubber material highly susceptible to wear is used, and other portions of the elastic member 7 for which a rubber material other than the rubber material highly susceptible to wear is used, are formed by, for example, two-color molding with the use of the seal mold 14. In a state where the metal core 6 is held in the cavity 19, the rubber material is firstly injected through the gate 20a positioned close to the outer peripheral side portion of the cavity 19, and the other portions of the elastic member 7 as a primary molded part is formed. Then, the material highly susceptible to wear is injected through the gate 20b positioned close to the inner peripheral side portion of the cavity 19, and the projection 12 of the sealing lip portion 9 as a secondary molded part is formed. The rubber material highly susceptible to wear may be firstly injected through the gate 20b positioned close to the inner peripheral side portion of the cavity 19 to form the projection 12, and the rubber material may be then injected through the gate 20a positioned close to the outer peripheral side portion of the cavity 19 to form the portions other than the projection 12. In either case, the projection 12 formed of the rubber material highly susceptible to wear and the other portions formed of the rubber material can be integrally formed by using the same seal mold 14.

An operation and effect will be described. In this configuration, as shown in Fig. 2A, the sealing lip portion 9 is formed so as to have a fishhook-shaped cross-section, and the thickness t1 of the waist portion 11 is particularly set so as to be not smaller than 25% of the thickness t2 of the tip end of the sealing member body 8, and not greater than 75% thereof. Further, the radial dimension A1 from the tip end of the sealing member body 8 to the base end of the projection 12 is set so as to be not smaller than 50% of the thickness t2 of the tip end of the sealing member body 8, and not greater than 100% thereof, and the radial dimension A2 from the tip end of the sealing member body 8 to the tip end of the projection 12 is set so as to be not smaller than 100% of the thickness t2 of the tip end of the sealing member body 8, and not greater than 150% thereof. Therefore, a contact surface pressure necessary for wearing the projection 12 is allowed to act therein, and the sealing lip portion 9 is flexibly deformed, whereby to avoid excessive increase of the contact surface pressure. Accordingly, the projection 12 can be worn by the bearing being operated, whereby an optimum small gap, that is, the labyrinth gap δs can be formed between the sealing lip portion 9 and the inner ring shoulder portion 1b. Therefore, sealing torque can be reduced early after operation. By the labyrinth gap δs being formed, the following effects can be obtained when the rolling bearing is used for, for example, a transmission for an automobile.

As compared to conventional products, self-increase of temperature of the bearing is early reduced, and an oil having a viscosity lower than a conventionally used oil can be selected. Further, early reduction of mechanical loss in the entirety of the transmission can be expected. Further, a gap to be formed is a labyrinth gap, thereby avoiding ingress of foreign matters having large particle diameters, which may adversely affect a life of the bearing, into the bearing.

Therefore, even when the interference δ1 between the inner ring 1 and the sealing lip portion 9 varies, a contact surface pressure of the sealing lip portion 9 against the inner ring 1 can be made constant, so as to form an optimum labyrinth gap between the sealing lip portion 9 and the inner ring 1. Accordingly, while ingress of foreign matters into the bearing can be avoided, fuel consumption of automobiles can be saved.

Another embodiment will be described. In the following description, the portions corresponding to the matters described in the preceding embodiment are denoted by the same reference numerals, and the repeated description is not given. In a case where only a portion of the configuration is described, the other portions of the configuration are the same as the portions in the description for the preceding embodiment, unless otherwise specified. The same operation and effect can be obtained from the same configuration. Not only portions that are specifically described in the embodiments may be combined, but also the embodiments may be partially combined unless any problem arises in the combination.

Fig. 7 is a plan view of a sealing member 5A of a rolling bearing according to a second embodiment of the present invention. Suction adhesion preventer 21 for preventing the sealing member from adhering, by suction, to the inner ring 1 (Fig. 1) may be provided in the sealing member. When the bearing has a contact-type sealing member, the sealing member may be adhered, by suction, to the inner ring due to reduction of internal pressure in the bearing, to increase torque. When the projection is formed of the material highly susceptible to wear, adhesion by suction may occur similarly to a standard contact seal before the projection is worn. Therefore, as shown in Fig. 7, a slit such as an arc-shaped hole that allows air to pass toward the inner side and the outer side of the bearing space is formed, as the suction adhesion preventer 21, at, for example, one portion in the circumferential direction of the outer peripheral portion 7a in the sealing member 5A. The slits may be provided at plural portions in the circumferential direction of the outer peripheral portion 7a. By the suction adhesion preventer 21 such as a slit being thus provided, the sealing member 5A can be prevented from adhering, by suction, to the inner ring due to reduction of internal pressure in the bearing before the projection is worn, thereby avoiding increase of torque caused by the adhesion by suction.

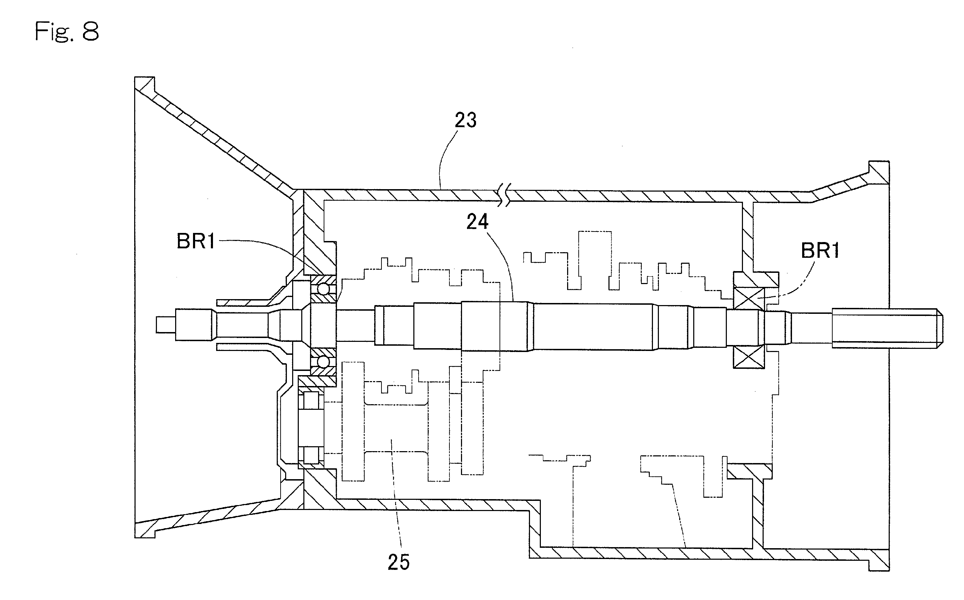

Fig. 8 schematically illustrates an exemplary case where the rolling bearing according to any one of the first and second embodiments is incorporated in a transmission for an automobile. Fig. 8 illustrates an example of an automatic transmission. Outer rings of rolling bearings BR1, BR1 are fitted into both ends of a transmission case 23 in the axial direction, and both ends of a main shaft 24 are rotatably supported by inner rings of the bearings BR1, BR1. A countershaft 25 is disposed in the transmission case 23 so as to be parallel to the main shaft 24. The countershaft 25 has a gear that meshes with a gear of the main shaft 24, and is rotatably supported by the transmission case 23 through the bearing.

In a case where the rolling bearings BR1, BR1 are thus incorporated in a transmission for an automobile, an optimum labyrinth gap is formed by the bearing being operated, whereby ingress, of foreign matters such as wear debris from the gear in the transmission, into the bearing can be avoided. Further, sealing torque can be reduced, whereby fuel consumption of the automobile can be saved. The rolling bearing according to any one of the first and second embodiments may be used for continuously variable transmissions or manual transmissions.

Although the preferred embodiments and application embodiments have been described with reference to the accompanying drawings as presented above, those skilled in the art will readily conceive numerous changes and modifications within the framework of obviousness upon the reading of the specification herein presented of the present invention. Accordingly, such changes and modifications are to be construed as included in the scope of the present invention as delivered from the claims annexed hereto.

### Reference Numerals

- 1: inner ring
- 2: outer ring
- 1a, 2a: raceway surfaces
- 3: rolling element
- 5, 5A: sealing member
- 8: sealing member body
- 9: sealing lip portion
- 9a: radial edge
- 11: waist portion
- 12: projection
- 13: relief recess
- 21: suction adhesion preventer

## Claims

1. A rolling bearing comprising: inner and outer rings; a plurality of rolling elements interposed between raceway surfaces of the inner and outer rings; and a sealing member that hermetically seals a bearing space formed between the inner and outer rings, wherein
the sealing member includes: a sealing member body having a base end fixed to a bearing ring that is one of the inner and outer rings; and a sealing lip portion disposed at a tip end of the sealing member body, the sealing lip position having a radial edge brought into radial contact with the other bearing ring,
the sealing lip portion has a fishhook-shaped cross-section, in which the sealing lip portion is bent at a waist portion that is an intermediate portion thereof in a radial direction, so as to form a relief recess in a surface on an outer side relative to the bearing space, and an extensive portion extends, in a turned back manner, from the radial edge so as to be inclined relative to an axial direction toward the outer side of the bearing,
the sealing lip portion includes a projection that has a tapered shape in which a portion that is closer to a tip end side than the waist portion has a dimension reduced toward a tip end side, and
a thickness of the waist portion is set so as to be not smaller than 25% of a thickness of the tip end of the sealing member body, and not greater than 75% thereof.

2. The rolling bearing as claimed in claim 1, wherein
a first radial dimension from the end of the sealing member body to a base end of the projection is set so as to be greater than or equal to 50% of the thickness of the end of the sealing member body, and not greater than 100% thereof, and
a second radial dimension from the end of the sealing member body to an end of the projection is set so as to be greater than or equal to 100% of the thickness of the end of the sealing member body, and not greater than 150% thereof.

3. The rolling bearing as claimed in claim 1 or 2, wherein an interference of the sealing lip portion is set so as to be greater than or equal to 20% of the thickness of the waist portion, and not greater than 70% thereof.

4. The rolling bearing as claimed in any one of claims 1 to 3, wherein the projection of the sealing lip portion is formed of such a material highly susceptible to wear as to allow the projection to be worn and enter a non-contact state, or enter a lightly contacting state in which a contact pressure is regarded as zero, when the bearing is used in its rotating state.

5. The rolling bearing as claimed in any one of claims 1 to 4, further comprising a suction adhesion preventer configured to prevent the sealing member from adhering, by suction, to the other bearing ring.

6. The rolling bearing as claimed in any one of claims 1 to 5, wherein the rolling bearing is used for a transmission for an automobile.
